# EUROPÄISCHE PATENTSCHRIFT

(11) **EP 3 995 422 B1**
(45) Veröffentlichungstag und Bekanntmachung des Hinweises auf die Patenterteilung: **09.08.2023**
(21) Anmeldenummer: 21201476.5
(22) Anmeldetag: 07.10.2021
(51) Int. Cl.: B65G 53/04, B65G 53/50

(54) **PULVERVERTEILVORRICHTUNG ZUR VERTEILUNG PULVERFÖRMIGER MEDIEN**
POWDER DISTRIBUTION DEVICE FOR DISTRIBUTING POWDERY MEDIA
DISPOSITIF DE DISTRIBUTION DE POUDRE DESTINÉ À LA DISTRIBUTION DES MILIEUX PULVÉRULENTS

(30) Priorität: 10.11.2020 DE 102020214116
(43) Veröffentlichungstag der Anmeldung: 11.05.2022
(73) Patentinhaber: SMS Group GmbH, 40237 Düsseldorf (DE)
(72) Erfinder: Beenders, Torsten, 42579 Heiligenhaus (DE)
(74) Vertreter: Klüppel, Walter

(56) Entgegenhaltungen:
- DE-C1- 3 305 079
- DE-T2- 69 829 747
- US-A- 2 989 777
- US-A- 4 085 776

## Beschreibung

Die Erfindung betrifft eine Pulververteilvorrichtung zur Verteilung pulverförmiger Medien, umfassend ein Gehäuse mit einer Längsachse, einen Einlass für den Einlass von mit Pulver beladener Luft und mindestens zwei Auslässe für den Auslass der mit Pulver beladenen Luft gemäß dem Oberbegriff des Anspruchs 1.

Für verschiedene technische Anwendungen wird Pulver benötigt, welches zu einer Bearbeitungs- oder Verbrauchsstelle geleitet werden muss. Dabei wird mit einer Pulverfördervorrichtung zunächst das Pulver in einen Luftstrom eingebracht. Eine solche Vorrichtung ist aus der DE 10 2016 106 052 A1 bekannt. Mit ihr ist es möglich, Pulver über gewisse Förderstrecken zu fördern. Das zu fördernde Pulver kann dabei für die verschiedensten Anwendungen vorgesehen sein. Abgesehen von allgemeinen Anwendungen kann beispielsweise eine Dosierung des Pulvers zwecks Auftragens auf technische Oberflächen in Betracht kommen. Weiterhin kann Glaspulver als Schmierstoff auf die Oberfläche von Werkstücken aufgebracht werden, um diese strangzupressen. Weiterhin kommt der Auftrag von Desoxidationspulvermischungen auf heiße Werkstückoberflächen in Betracht. Ferner kann pulverförmiger Schmierstoff auf Werkzeugoberflächen aufgebracht werden, wobei insbesondere an Dornstangen, an Stauchdorne, an Stauchschalen und an Pressstempel gedacht ist. Schließlich sei die Aufbringung von pulverförmigen Schmierstoffen auf Werkstückoberflächen erwähnt, beispielsweise auf Rohrenden, Grobbleche oder Schmiederohlinge.

Sind mehrere Verbrauchsstellen für das Pulver vorgesehen, ist es aus ökonomischen Gründen sinnvoll, nicht separate Leitungen vorzusehen (mit jeweils separaten Pulverfördervorrichtung), sondern am Ende der Förderstrecke das Pulver auf mehrere Verbrauchsstellen zu verteilen. Das Pulver wird demgemäß am Ende der Leitung gleichmäßig und gleichzeitig auf mehrere Stellen verteilt, wobei auch größere Mengen an Pulver erforderlich sein können.

Üblich ist es, den Pulverstrom über Y-Verteiler oder T-Verteiler auf mehrere Verbrauchsstellen zu verteilen. Ist dies nicht angebracht, kommt, wie oben angemerkt, der Einsatz mehrerer unabhängiger Pulverfördersysteme in Betracht, was allerdings entsprechend kostenintensiv ist.

Insbesondere feine oder kompaktierbare Pulver neigen zum Anhaften an den Prallflächen der genannten Verteiler. Das unerwünschte Resultat sind ungleichmäßige Fördermengen in den einzelnen aufgeteilten Transportsträngen, was bis hin zu Verstopfungen in den Leitungen führen kann.

Aus der DE 698 29 747 T2 ist eine Vorrichtung bekannt, die allerdings nicht zur Verteilung pulverförmiger Medien vorgesehen ist, sondern als Zyklonabscheider, welcher zum Separieren von Feststoffen in der Luft dient.

Der Erfindung liegt die **Aufgabe** zugrunde, eine Vorrichtung der eingangs genannten Art so fortzubilden, dass es möglich ist, mit Pulver beladene Luft, die über den Einlass der Vorrichtung zugeführt wird, auf mehrere Auslässe möglichst gleichmäßig zu verteilen.

Die Lös u n g dieser Aufgabe durch die Erfindung ist dadurch gekennzeichnet, dass im Inneren des Gehäuses ein Wandungselement angeordnet ist, welches eine innere Begrenzung des Strömungsweges bildet, wobei das Wandungselement eine kegelförmige Außenfläche aufweist.

Bevorzugt verkleinert sich die Fläche des Strömungsweges in einem Schnitt senkrecht zur Längsachse des Gehäuses beim Fortschreiten von der ersten Position zur zweiten Position stets und kontinuierlich.

Im Inneren des Gehäuses kann ferner eine äußere Begrenzung des Strömungsweges ausgebildet sein, die eine zylindrische Form aufweist.

Der Einlass weist vorzugsweise einen rohrförmigen Abschnitt mit einer Einlassachse auf oder ist als solcher ausgebildet, wobei die Einlassachse in einer Ebene liegt, die senkrecht auf der Längsachse des Gehäuses steht, wobei die Einlassachse und die Längsachse einen Abstand voneinander aufweisen. Die Einlassachse trifft dabei bevorzugt in einem Schnitt senkrecht zur Längsachse tangential auf den ringförmig ausgebildeten Strömungsweg.

Entsprechend kann vorgesehen sein, dass die Auslässe einen rohrförmigen Abschnitt mit einer Auslassachse aufweisen oder als solche ausgebildet sind, wobei die Auslassachse in einer Ebene liegt die senkrecht auf der Längsachse des Gehäuses steht, wobei die Auslassachse und die Längsachse einen Abstand voneinander aufweisen. Die Auslassachse trifft wiederum bevorzugt in einem Schnitt senkrecht zur Längsachse tangential auf den ringförmig ausgebildeten Strömungsweg.

Bevorzugt sind mindestens drei Auslässe angeordnet.

Die Auslässe sind bevorzugt äquidistant um den Umfang des Gehäuses herum angeordnet.

Das Gehäuse weist bevorzugt eine im wesentlichen zylindrische Außenkontur auf.

Die vorgeschlagene Vorrichtung erlaubt zunächst generell die Reduzierung des nötigen Anlagenaufwands, indem separate Fördervorrichtungen eingespart werden können. Dennoch ist es möglich, ein großflächiges und gleichmäßiges Aufbringen technischer Pulver zu bewerkstelligen, beispielsweise auf heiße Oberflächen, um Zunderbildung zu verhindern oder eine Schmierfilmbildung für einen nachfolgenden Prozess (Walzprozess) zu ermöglichen, was insbesondere bei Blechen, Platten, Bändern und Profilen relevant ist.

Ähnlich wie bei einem Zyklon wird das Pulver-Luft-Gemisch, kommend von der Dosiervorrichtung, bevorzugt tangential in eine Kammer eingeblasen und dadurch in Rotation versetzt. Auf seinem Weg zu den Auslässen reduziert sich das Kammervolumen (welches den Strömungsweg des Gemisches bildet), wodurch die Rotationsgeschwindigkeit des Gemisches vergrößert wird. Am oberen Ende der Kammer befinden sich die Auslässe, die wiederum bevorzugt tangential auf die Kammer hin ausgerichtet sind. Die Auslässe haben dabei jeweils einen gleichen Querschnitt.

Sobald das Pulver-Luft-Gemisch den ersten Auslass erreicht, strömt es dort in die Leitung hinein, wodurch der Gegendruck in dieser Leitung ansteigt. Dadurch fließt das nachfolgende Gemisch zum nächsten Auslass, in dem noch ein geringerer Gegendruck herrscht. In dieser Zeit fließt jedoch das Pulver-Luft-Gemisch im ersten Auslass weiter, so dass sich hier der Gegendruck wieder vermindert und somit weiteres Pulver dort eingetragen werden kann. Dieses Prinzip gilt für alle Auslässe in gleicher Weise, so dass mit der vorgeschlagenen Ausgestaltung erreicht werden kann, dass gleiche Mengen Gemisch pro Zeit ausgetragen bzw. verteilt werden.

Durch den Einsatz effektiver Pulverfördervorrichtungen mit Venturidüse (s. hierzu die bereits genannte Druckschrift DE 10 2016 106 052 A1) kann ein breiter Bereich an Anwendungsfällen befriedigt werden. Insbesondere können große Pulverströme realisiert werden, mit denen beispielsweise große Oberflächen beschichtet werden können.

Der Auftrag des Pulvers kann somit gleichmäßig und schnell erfolgen und die Prozesssicherheit dabei erhöht werden.

Hierdurch ergeben sich in verschiedenen Bereichen insbesondere der Massivumformung neue Möglichkeiten der Schmierung. Üblicherweise wird hier das Werkzeug bislang gekühlt und geschmiert, da die heißen Oberflächen der Werkstücke (infolge des Leidenfrost-Effekts) nicht mit flüssigen Schmierstoffen beaufschlagt werden können. Sofern es möglich ist, werden daher die Werkzeuge hier gekühlt und anschließend geschmiert.

Bei Einsatz von Pulver (bei dem der Leidensfrost-Effekt nicht auftritt) ergeben sich somit neue Möglichkeiten. Das Werkstück wird demgemäß mit Pulver behandelt, welches bereits schmierende Eigenschaften aufweisen kann, so dass die Fertigung entsprechend vereinfacht werden kann.

Ein derartiges Vorgehen ist beispielsweise bei halbwarmen Schmiedeprozessen bekannt, bei dem das Billet vorgraphitiert wird. Es wird auf ca. 120 °C erwärmt, durchläuft dann ein Graphit-Wasser-Bad und kann nach der Trocknung dann dem Schmiedeprozess zugeführt werden. Ähnliches gilt auch für Pressbolzen beim Strangpressen, die z. B. mit einer Slurry vorbehandelt werden. Es handelt sich dabei jedoch stets um Wasser-Schmierstoff-Mischungen, bei denen das Wasser vor dem eigentlichen Umformvorgang verdampft sein muss.

Mit Hilfe der Pulver-Auftragung kann ein Werkstück im Prozess direkt mit einem Schmierstoff oder einem Desoxidationsschutz (oder beidem) direkt beschichtet werden. Ein Zwischenschritt in Form einer Vorerwärmung oder Trocknung entfällt demgemäß.

Voraussetzung dafür ist allerdings eine effektive Versorgung mit Pulver, die durch die vorgeschlagene Vorrichtung sichergestellt wird.

Ein genaues Dosieren des Pulvers kann beispielsweise durch Schneckenförderer oder Scheibenförderer erfolgen. Damit kann die Aufbringung von Pulver pro Zeit (also in Gramm/Sekunde) auf eine zu versorgende Oberfläche präzise erfolgen, wobei beispielsweise die Schichtdicke auf der Oberfläche reproduzierbar eingestellt werden kann.

Namentlich können mit der vorgeschlagenen Vorrichtung mehrere Versorgungsstellen (Pulveraustritte) gleichmäßig versorgt werden.

Somit ist insbesondere eine reproduzierbare Schmierung heißer Oberflächen mit Pulver möglich. Es kann, wie gesagt, eine Verminderung aufwendiger Kühlprozesse für Werkzeuge realisiert werden, was erforderlich ist, damit flüssiger Schmierstoff auf der Oberfläche anhaftet. Weiterhin ist der Ersatz von Flüssigschmierung, beispielsweise im Falle von Schmiedepressen oder Stauchpressen, möglich, gleichermaßen auch die Vermeidung von Zunderbildung beim Warmumformen durch Auftrag eines Pulvers, welches die Bildung von Zunder verhindert.

Im Zusammenhang mit der vorliegenden Erfindung wird von mit Pulver beladener Luft gesprochen. In diesem Zusammenhang sei folgendes angemerkt:
Der typische Anwendungsfall ist der, bei dem Druckluft zur Förderung des Pulvers eingesetzt wird. Natürlich kann gleichermaßen, ohne den Umfang der vorliegenden Erfindung zu verlassen, auch ein anderes Fördergas zum Einsatz kommen, wozu beispielsweise auf Stickstoff hingewiesen wird, welcher sich gleichermaßen gut zur Nutzung der vorliegenden Erfindung eignet.

Betreffend das hier genannte Pulver sei angemerkt, dass bei der Verwendung dieser Nomenklatur keine Einschränkung betreffend die Partikelgröße des zu fördernden Materials gemeint ist. Beispielsweise kann Glaspulver, welches sich auch mit dem erfindungsgemäßen Vorschlag bestens fördern lässt, Partikel haben, die 1 mm oder größer sind. Insofern sind im vorliegenden Falle unter Pulver auch solche Materialien zu verstehen, die man alternativ auch als Granulat bezeichnen könnte.

In der Zeichnung ist ein Ausführungsbeispiel der Erfindung dargestellt. Es zeigen:
- Fig. 1: eine Pulververteilvorrichtung gemäß der Erfindung in der geschnittenen Seitenansicht,
- Fig. 2: den Schnitt C-D gemäß Fig. 1 und
- Fig. 3: den Schnitt E-F gemäß Fig. 1.

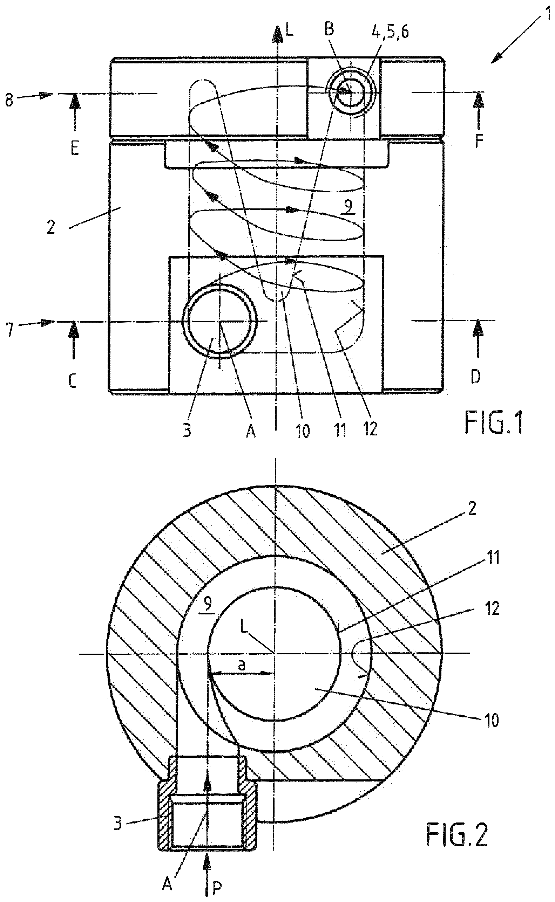

In Figur 1 ist eine Pulververteilvorrichtung 1 dargestellt, wie sie zum Verteilen eines Pulvers auf mehrere Versorgungsstellen eingesetzt werden kann. Das Pulver wird dabei über eine (nicht dargestellte) Leitung zugeführt und befindet sich als Fracht in Druckluft. Die Einbringung des Pulvers in die Luft erfolgt mit einer Vorrichtung, wie sie aus der oben genannten DE 10 2016 106 052 A1 bekannt ist, worauf insoweit Bezug genommen wird.

Die Pulververteilvorrichtung 1 weist ein im wesentlichen zylindrisches Gehäuse 2 auf, welche sich entlang einer Längsachse L erstreckt. An einer ersten Position 7 der Längsachse, also an einer ersten axialen Stelle des Gehäuses 2, befindet sich ein Einlass 3, mit dem die mit Pulver beladene Luft P zugeführt wird (s. hierzu Figur 2). An einer zweiten Position 8, also an einer zweiten axialen Stelle des Gehäuses 2, befinden sich im Ausführungsbeispiel drei Auslässe 4, 5 und 6. Ziel ist es, das über den Einlass 3 zugeführte Pulver möglichst gleichmäßig und gleichzeitig über die drei Auslässe 4, 5 und 6 auszubringen und nicht weiter dargestellten Verbrauchsstellen zuzuführen.

Im Inneren des Gehäuses 2 ist ein Strömungsweg 9 für die mit Pulver beladene Luft P ausgebildet. Der Strömungsweg 9 hat eine radial äußere Begrenzung 12, die durch eine entsprechende zylindrische Ausnehmung im Inneren des Gehäuses gebildet wird. Des weiteren hat der Strömungsweg 9 eine radial innere Begrenzung 11, die durch ein Wandungselement 10 gebildet wird, welches sich koaxial zur Längsachse L im Gehäuse 2 befindet. Das Wandungselement hat eine kegelförmliche Gestalt. Die Rotationsachse des Kegels und die Längsachse L sind identisch.

Wesentlich ist dabei, dass sich die Fläche des Strömungsweges 9 in einem Schnitt senkrecht zur Längsachse L des Gehäuses 2 beim Fortschreiten von der ersten Position 7 zur zweiten Position 8 verkleinert, wobei dies im Ausführungsbeispiel kontinuierlich und über die gesamte Erstreckung von der ersten Position 7 bis zur zweiten Position 8 erfolgt.

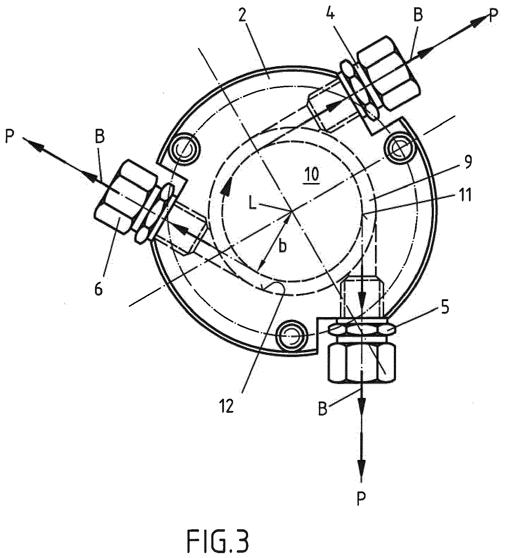

Die Anordnung und Ausrichtung des Einlasses 3 bzw. der Auslässe 4, 5 und 6 ist in den Figuren 2 bzw. 3 dargestellt.

Wie aus Figur 2 gesehen werden kann, umfasst der Einlass 3 einen rohrartigen Abschnitt, der eine Einlassachse A aufweist. Diese liegt in einer Ebene, die senkrecht auf der Längsachse L steht. Darüber hinaus tritt die Einlassachse A tangential in den Strömungsweg 9 ein, was durch den Abstand a zwischen der Einlassachse A und der Längsachse L in Figur 2 markiert ist.

Analoges gilt für die drei Auslässe 4, 5 und 6, wie es aus Figur 3 hervorgeht. Die drei Auslässe 4, 5 und 6 sind um den Umfang des Gehäuses 2 herum gleichmäßig verteilt angeordnet (also jeweils um einen Winkel von 120° versetzt), wobei die Auslässe 4, 5 und 6 ebenfalls durch rohrförmige Abschnitte gebildet werden, die jeweilige Auslassachsen B haben. Wiederum treten auch die Auslassachsen B tangential in den Strömungsweg 9 ein, was durch den Abstand b zwischen der Auslassachse B und der Längsachse L in Figur 3 markiert ist.

Die über den Einlass 3 eintretende Luft, die die Pulverfracht beinhaltet, wird infolge des sich allmählich verengenden Strömungsweg (wegen der kegelförmigen Gestalt des Wandungselements 10) aufgrund der Gegebenheiten der Kontinuitätsgleichung beschleunigt und gelangt im oberen Bereich des Gehäuses, d. h. im Bereich der drei Auslässe 4, 5 und 6 zu denselben, wo sich automatisch eine gleichmäßige Verteilung der Ausbringung des Pulvers P an allen drei Auslässen 4, 5 und 6 ergibt, wie es oben erläutert wurde. Der Strömungsweg der mit Pulver beladenen Luft ist in Figur 1 und in Figur 3 mit Pfeilen schematisch angedeutet.

Somit wird ohne hohen apparativen Aufwand (und namentlich ohne separate Dosiersysteme für die drei Entnahmestellen für Pulver) eine gleichmäßige Menge Pulver pro Zeit ausgebracht.

### Bezugszeichenliste:

- 1: Pulververteilvorrichtung
- 2: Gehäuse
- 3: Einlass
- 4: Auslass
- 5: Auslass
- 6: Auslass
- 7: erste Position
- 8: zweite Position
- 9: Strömungsweg
- 10: Wandungselement
- 11: innere Begrenzung
- 12: äußere Begrenzung

- L: Längsachse
- A: Einlassachse
- a: Abstand Einlassachse - Längsachse
- B: Auslassachse
- b: Abstand Auslassachse - Längsachse
- P: mit Pulver beladene Luft

## Patentansprüche

1. Pulververteilvorrichtung (1) zur Verteilung pulverförmiger Medien, umfassend ein Gehäuse (2) mit einer Längsachse (L), einen Einlass (3) für den Einlass von mit Pulver beladener Luft (P) und mindestens zwei Auslässe (4, 5, 6) für den Auslass der mit Pulver beladenen Luft (P), wobei der Einlass (3) an einer ersten Position (7) der Längsachse (L) des Gehäuses (2) angeordnet ist, wobei die Auslässe (4, 5, 6) an einer zweiten Position (8) der Längsachse (L) des Gehäuses (2) angeordnet sind, wobei sich die zweite Position (8) von der ersten Position (7) unterscheidet, wobei im Inneren des Gehäuses (2) ein Strömungsweg (9) für die mit Pulver beladene Luft (P) gebildet wird,
wobei sich die Fläche des Strömungsweges (9) in einem Schnitt senkrecht zur Längsachse (L) des Gehäuses (2) beim Fortschreiten von der ersten Position (7) zur zweiten Position (8) zumindest abschnittsweise verkleinert,
wobei der Einlass (3) einen rohrförmigen Abschnitt mit einer Einlassachse (A) aufweist oder als solcher ausgebildet ist, wobei die Einlassachse (A) in einer Ebene liegt, die senkrecht auf der Längsachse (L) des Gehäuses (2) steht, wobei die Einlassachse (A) und die Längsachse (L) einen Abstand (a) voneinander aufweisen, wobei die Einlassachse (A) in einem Schnitt senkrecht zur Längsachse (L) tangential auf den ringförmig ausgebildeten Strömungsweg (9) trifft, und
wobei die Auslässe (4, 5, 6) einen rohrförmigen Abschnitt mit einer Auslassachse (B) aufweisen oder als solche ausgebildet sind, wobei die Auslassachse (B) in einer Ebene liegt, die senkrecht auf der Längsachse (L) des Gehäuses (2) steht, wobei die Auslassachse (B) und die Längsachse (L) einen Abstand (b) voneinander aufweisen, wobei die Auslassachse (B) in einem Schnitt senkrecht zur Längsachse (L) tangential auf den ringförmig ausgebildeten Strömungsweg (9) trifft,
**dadurch gekennzeichnet,**
**dass** im Inneren des Gehäuses (2) ein Wandungselement (10) angeordnet ist, welches eine innere Begrenzung (11) des Strömungsweges (9) bildet, wobei das Wandungselement (10) eine kegelförmige Außenfläche aufweist.

2. Pulververteilvorrichtung nach Anspruch 1, **dadurch gekennzeichnet, dass** sich die Fläche des Strömungsweges (9) in einem Schnitt senkrecht zur Längsachse (L) des Gehäuses (2) beim Fortschreiten von der ersten Position (7) zur zweiten Position (8) stets und kontinuierlich verkleinert.

3. Pulververteilvorrichtung nach Anspruch 1 oder 2, **dadurch gekennzeichnet, dass** im Inneren des Gehäuses (2) eine äußere Begrenzung (12) des Strömungsweges (9) ausgebildet ist, die eine zylindrische Form aufweist.

4. Pulververteilvorrichtung nach einem der Ansprüche 1 bis 3, **dadurch gekennzeichnet, dass** mindestens drei Auslässe (4, 5, 6) angeordnet sind.

5. Pulververteilvorrichtung nach einem der Ansprüche 1 bis 4, **dadurch gekennzeichnet, dass** die Auslässe (4, 5, 6) äquidistant um den Umfang des Gehäuses (2) herum angeordnet sind.

6. Pulververteilvorrichtung nach einem der Ansprüche 1 bis 5, **dadurch gekennzeichnet, dass** das Gehäuse (2) eine im wesentlichen zylindrische Außenkontur aufweist.

## Claims

1. Powder distribution device (1) for distributing pulverulent media, comprising a housing (2) with a longitudinal axis (L), an inlet (3) for inflow of air (P) laden with powder and at least two outlets (4, 5, 6) for outflow of the air (P) laden with powder, wherein the inlet (3) is arranged at a first position (7) of the longitudinal axis (L) of the housing (2), wherein the outlets (4, 5, 6) are arranged at a second position (8) of the longitudinal axis (L) of the housing (2), wherein the second position (8) differs from the first position (7), wherein a flow path (9) for the air (P) laden with powder is formed in the interior of the housing (2),
wherein the area of the flow path (9) in a section perpendicular to the longitudinal axis (L) of the housing (2) reduces at least section-wise in progression from the first position (7) to the second position (8),
wherein the inlet (3) has a tubular section with an inlet axis (A) or is formed as such, wherein the inlet axis (A) lies in a plane perpendicular to the longitudinal axis (L) of the housing (2), wherein the inlet axis (A) and the longitudinal axis (L) have a spacing (a) from one another, wherein the inlet axis (A) in a section perpendicular to the longitudinal axis (L) is tangential to the annularly formed flow path (9) and
wherein the outlets (4, 5, 6) have a tubular section with an outlet axis (B) or are formed as such, wherein the outlet axis (B) lies in a plane perpendicular to the longitudinal axis (L) of the housing (2), wherein the outlet axis (B) and the longitudinal axis (L) have a spacing (b) from one another, wherein the outlet axis (B) in a section perpendicular to the longitudinal axis (L) is tangential to the annularly formed flow path (9),
**characterised in that**
a wall element (10) forming an inner boundary (11) of the flow path (9) is arranged in the interior of the housing (2), wherein the wall element (10) has a conical outer surface.

2. Powder distribution device according to claim 1, **characterised in that** the area of the flow path (9) in a section perpendicular to the longitudinal axis (L) of the housing (2) steadily and continuously reduces in progression from the first position (7) to the second position (8).

3. Powder distribution device according to claim 1 or 2, **characterised in that** an outer boundary (12), which has a cylindrical shape, of the flow path (9) is formed in the interior of the housing (2).

4. Powder distribution device according to any one of claims 1 to 3, **characterised in that** at least three outlets (4, 5, 6) are arranged.

5. Powder distribution device according to any one of claims 1 to 4, **characterised in that** the outlets (4, 5, 6) are arranged equidistantly around the circumference of the housing (2).

6. Powder distribution device according to any one of claims 1 to 5, **characterised in that** the housing (2) has a substantially cylindrical outer contour.

## Revendications

1. Dispositif de distribution de poudre (1) destiné à la distribution de milieux pulvérulents, qui comprend un boîtier (2) muni d'un axe longitudinal (L), une entrée (3) pour l'entrée d'air chargé de poudre (P) et au moins deux sorties (4, 5, 6) pour l'évacuation de l'air chargé de poudre (P) ; dans lequel l'entrée (3) est disposée à un premier endroit (7) de l'axe longitudinal (L) du boîtier (2) ; dans lequel les sorties (4, 5, 6) sont disposées à un deuxième endroit (8) de l'axe longitudinal (L) du boîtier (2) ; dans lequel le deuxième endroit (8) est différent du premier endroit (7) ; dans lequel, à l'intérieur du boîtier, on forme une voie d'écoulement (9) pour l'air chargé de poudre (P) ;
dans lequel la surface de la voie d'écoulement (9), dans une section qui est perpendiculaire par rapport à l'axe longitudinal (L) du boîtier (2), se rétrécit au moins en partie lorsqu'on progresse à partir du premier endroit (7) en direction du deuxième endroit (8) ;
dans lequel l'entrée (3) présente un tronçon de forme tubulaire qui comprend un axe d'entrée (A) ou est réalisée comme telle ; dans lequel l'axe d'entrée (A) est situé dans un plan qui est perpendiculaire à l'axe longitudinal (L) du boîtier (2) ; dans lequel l'axe d'entrée (A) et l'axe longitudinal (L) sont situés à une distance (a) l'un par rapport à l'autre ; dans lequel l'axe d'entrée (A), dans une section qui est perpendiculaire par rapport à l'axe longitudinal (L), rencontre de manière tangentielle la voie d'écoulement (9) réalisée sous une forme annulaire ; et
dans lequel les sorties (4, 5, 6) présentent un tronçon de forme tubulaire qui comprend un axe de sortie (B) ou sont réalisées comme telles ; dans lequel l'axe de sortie (B) est situé dans un plan qui est perpendiculaire à l'axe longitudinal (L) du boîtier (2) ; dans lequel l'axe de sortie (B) et l'axe longitudinal (L) sont situés à une distance (b) l'un par rapport à l'autre ; dans lequel l'axe de sortie (B), dans une section dans une section qui est perpendiculaire par rapport à l'axe longitudinal (L), rencontre de manière tangentielle la voie d'écoulement (9) réalisée sous une forme annulaire ;
**caractérisé**
**en ce qu'**un élément faisant office de paroi (10) est disposé à l'intérieur du boîtier (2), qui forme une limitation interne (11) de la voie d'écoulement (9) ; dans lequel l'élément faisant office de paroi (10) présente une surface externe en forme de cône.

2. Dispositif de distribution de poudre selon la revendication 1, **caractérisé en ce que** la surface de la voie d'écoulement (9), dans une section qui est perpendiculaire par rapport à l'axe longitudinal (L) du boîtier (2), se rétrécit constamment et en continu lorsqu'on progresse à partir du premier endroit (7) en direction du deuxième endroit (8).

3. Dispositif de distribution de poudre selon la revendication 1 ou 2, **caractérisé en ce que**, à l'intérieur du boîtier (2), on réalise une limitation externe (12) de la voie d'écoulement (9), qui présente une forme cylindrique.

4. Dispositif de distribution de poudre selon l'une quelconque des revendications 1 à 3, **caractérisé en ce que** l'on prévoit au moins trois sorties (4, 5, 6).

5. Dispositif de distribution de poudre selon l'une quelconque des revendications 1 à 4, **caractérisé en ce que** les sorties (4, 5, 6) sont disposées, en position équidistante, sur toute la périphérie du boîtier (2).

6. Dispositif de distribution de poudre selon l'une quelconque des revendications 1 à 5, **caractérisé en ce que** le boîtier (2) présente un contour externe essentiellement de forme cylindrique.
